# EUROPÄISCHE PATENTSCHRIFT

(11) **EP 2 235 420 B1**
(45) Veröffentlichungstag und Bekanntmachung des Hinweises auf die Patenterteilung: **06.07.2011**
(21) Anmeldenummer: 09799247.3
(22) Anmeldetag: 02.12.2009
(51) Int. Cl.: F16L 23/028, F16L 23/032

(54) **VERFAHREN ZUM HERSTELLEN EINES LOSFLANSCHES SOWIE ARMATUR MIT WENIGSTENS EINEM ROHRABSCHNITT SOWIE MIT EINEM LOSFLANSCH**
METHOD FOR PRODUCING A LOOSE FLANGE AND ARMATURE HAVING AT LEAST ONE PIPE SEGMENT AND HAVING A LOOSE FLANGE
PROCÉDÉ DE FABRICATION D'UNE BRIDE MOBILE, ET GARNITURE COMPORTANT AU MOINS UN SEGMENT DE TUBE AINSI QU'UNE BRIDE MOBILE

(30) Priorität: 29.12.2008 DE 102008063296
(43) Veröffentlichungstag der Anmeldung: 06.10.2010
(73) Patentinhaber: Erhard GmbH & Co. KG, 89522 Heidenheim (DE)
(72) Erfinder: KUCK, Matthias, 73540 Heubach (DE)
(74) Vertreter: Dr. Weitzel & Partner
(86) Internationale Anmeldenummer: PCT/EP2009/008572
(87) Internationale Veröffentlichungsnummer: WO 2010/075925

(56) Entgegenhaltungen:
- EP-A1- 0 054 286
- DE-A1- 4 428 522
- US-A- 3 620 554
- US-A- 3 861 722

## Beschreibung

Die Erfindung betrifft das Gebiet der Armaturen als Bestandteil von fluidführenden Rohren. Solche Armaturen werden für alle fließfählgen Medlen angewandt, belsplelsweise Wasser oder Gas. Sie können Bestandteile von Absperrklappen, Absperrschlebern oder Rohrverbindungen sein. Auch werden Festflansche und Losflansche miteinander kombiniert.

Eine einfache Ausführungsform eines Losflansches ist beschrieben in DE 10 2004 019 879 A1. Dabei umschließt ein Anschlagring den Endbereich eines Rohres und ist mit diesem fest verbunden. Ein ebenfalls ringförmiger Losflansch umschließt ebenfalls den Endbereich des Rohres, und zwar axial neben dem Anschiagring. Der Losflansch weist auf seinem äußeren Umfangsbereich Bohrungen auf. Durch diese werden Schrauben hindurchgesteckt, die ein Verspannen mit einem Gegenflansch eines benachbarten Rohrendes erlauben.

DE 44 28 522 C2 beschreibt einen sogenannten Tauschschleber. Ein solcher Tauschschieber dient dazu, den Austausch eines alten, reparaturbedürftlgen Schiebers zu erleichtern. Auch hierbei sind Losflansche vorgesehen.

EP 0 054 286 A1 beschreibt ein gattunsgemäßes Verfahren zum Herstellen einer Armatur mit einem Losflansch. Diese gegossene Armatur umfasst ein Rohr mit einem festen, am Ende befindlichen Flansch. Ein zweiter Flansch wird dem Rohr angegossen, und ist mit diesem über Stege verbunden. Nach dem Gießen werden die Stege durchtrennt, sodass der zweite Flansch als Losflansch verwendbar ist. Dieses Verfahren hat den Nachteil, dass der Innenumfang des Losflansches nach dem Durchtrennen der Stege bearbeitet werden muss.

US 3 861 722 A beschreibt eine Armatur mit einem Rohrabschnitt, einem Losflansch und mit einer Verbindungseinrichtung zum Herstellen einer Verbindung zwischen Losflansch und Rohrabschnitt. Dabei ist der Rohrabschnitt im Bereich des Losflansches mit einer Ringnut versehen. Ferner ist ein Haltering vorgesehen, der mit einem radial inneren Ende in die Ringnut eingreift und mit einem radial äußeren Ende am Losflansch angreift. Schließlich ist ein Dichtring zwischen dem radial inneren Ende des Losflansches und dem Endbereich des Rohrabschnittes angeordnet.

Der Erfindung liegt die Aufgabe zugrunde, ein Verfahren anzugeben, mit dem sich ein Losflansch auf einfache und kostengünstige Welse herstellen lässt. Die Erfindung soll ferner eine Armatur mit einem Losflansch und einer Verbindungseinrichtung angeben, die sich kostengünstig herstellen lässt und eine zuverlässige Verbindung aufweist, und dabei eine begrenzte axiale Verschlebbarkeit des Losflansches zulässt.

Diese Aufgabe wird durch die Merkmale der unabhängigen Ansprüche gelöst. Der wesentliche Gedanke besteht darin, von einer Armatur auszugehen, die einen Rohrabschnitt mit einem festen Flansch aufweist, und aus dem festen Flansch mittels eines Zylinderschnittes einen Ring abzustechen, der sodann als Losflansch verwendet werden kann.

Das erfindungsgemäße Verfahren hat die folgenden Vorteile;
- Das Herstellen des Losflansches ist äußerst einfach. Es muss somit nicht ein besonderer Flansch dem Rohrabschnitt angegossen werden. Vielmehr wird der bereits vorhandene Flansch verwendet.
- Es bedarf grundsätzlich keiner oder nur geringer Nacharbeit des so gewonnenen Losflansches.
- Es lassen sich existierende Armaturen verwenden, die beispielsweise reparaturbedürftig sind, oder die aus irgendwelchen Gründen zu einer Losflansch-Bauart umgewandelt werden sollen.
- Es können vorhandene Gussmodelle verwendet werden; das Losflanschsystem lässt sich leicht bei unterschiedlichen Arten von Armaturen anwenden. So können auf Vorrat gefertigte Armaturen In eine Losflansch-Version umgewandelt werden.

Die Erfindung ist anhand der Zeichnung näher erläutert. Darin ist im Einzelnen Folgendes dargestellt, und zwar Jeweils in einem Axialschnitt:
- Figur 1: zeigt die Armatur als Ausgangsprodukt.
- Figur 2: zeigt den Gegenstand von Figur 1 mit abgetrenntem Flansch.
- Figur 3: zeigt die Armatur mit dem zum Losflansch umgewandelten, abgetrennten Flansch, verbunden mit dem Rohrabschnitt.
- Fig. 4, 5 u. 6: zeigen drei verschiedene Arten des Verbindens von Losflansch und Rohrabschnitt.

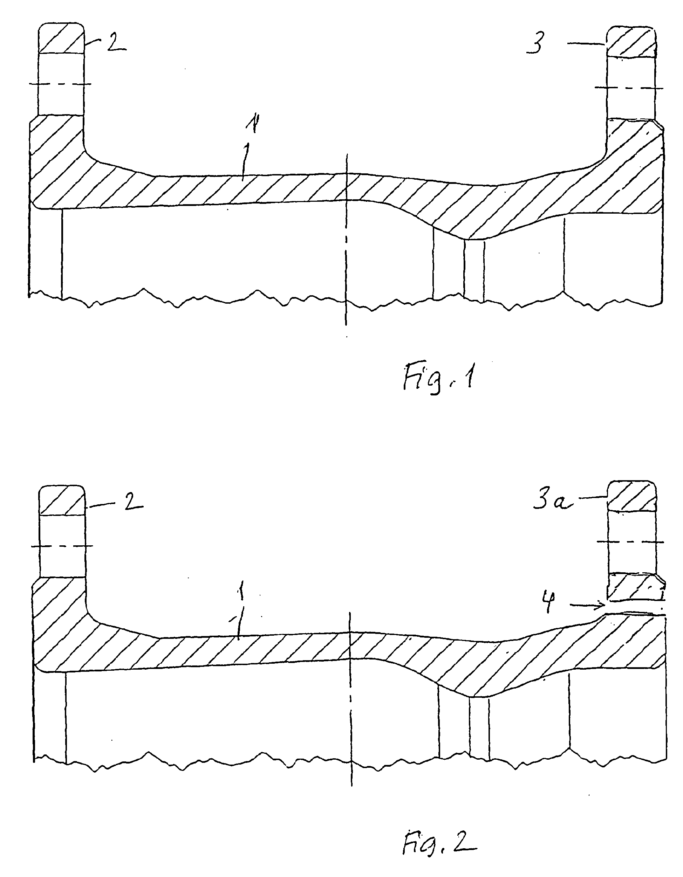

Die in Figur 1 gezeigte Armatur weist einen Rohrabschnitt 1 auf, ferner jeweils einen Festflansch 2 und 3, beide an einem Ende des Rohrabschnittes 1 angeordnet. Die Armatur besteht, im vorliegenden Falle aus Grauguss. Sie könnte auch aus einem anderen Material hergestellt sein. Sie kann auch durch spanabhebende Fertigung erzeugt sein, wiederum aus jeglichem Material.

Figur 2 zeigt die Armatur gemäß Figur 1, wobei jedoch einer der beiden Festflansche, nämlich Festflansch 3, durch einen Zylinderschnitt vom übrigen Rohrabschnitt abgestochen ist. Dabei verbleibt zwischen dem abgestochenen Festflansch 3 und dem übrigen Rohrabschnitt 1 ein Ringspalt 4.

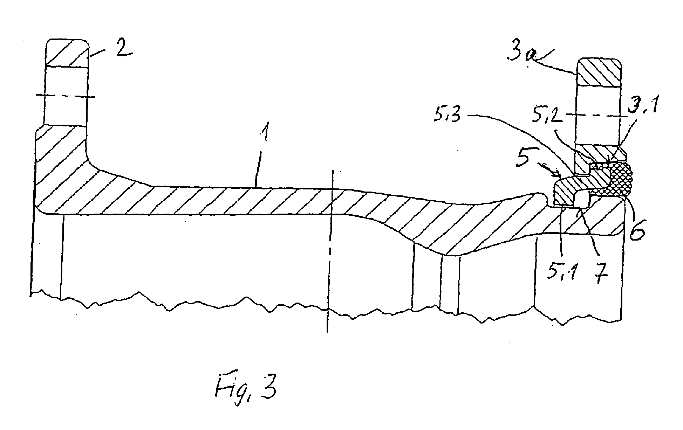

In Figur 3 ist der ehemalige Festflansch 3 zum Losflansch 3a geworden. Er ist mit dem Rohrabschnitt 1 durch eine Verbindungseinrichtung verbunden. Die Verbindungseinrichtung umfasst einen Haltering 6 sowie einen Dichtring 6. Haltering 5 hat eine abgekröpfte Gestalt. Er weist ein radial inneres Ende 5.1 auf sowie ein radial äußerer Ende 5.2. sowie einem diese beiden miteinander verbindenden Steg 5.3. Das radial innere Ende 5.1 des Halteringes greift in eine Nut/Ringnut 7 in Rohrabschnitt 1 ein. Der Losflansch 3a ist mit einem Absatz 3.1 versehen. Dichtring 6 besteht aus einem elastischen Material, beispielsweise Gummi oder Kunststoff oder ein anderes Material.

Haltering 5 stellt aufgrund der besonderen Gestalt der Nut/Ringnut 7, des Absatzes 3,1 sowie des Dichtringes 6 eine besondere Verbindung zwischen dem Lasflansch 3a und dem Rohrabschnitt 1 her. Die Verbindung erlaubt nämlich ein begrenztes axiales Verschieben des Losflansches 3a parallel zur Längsachse des Rohrabschnittes 1 (nicht dargestellt).

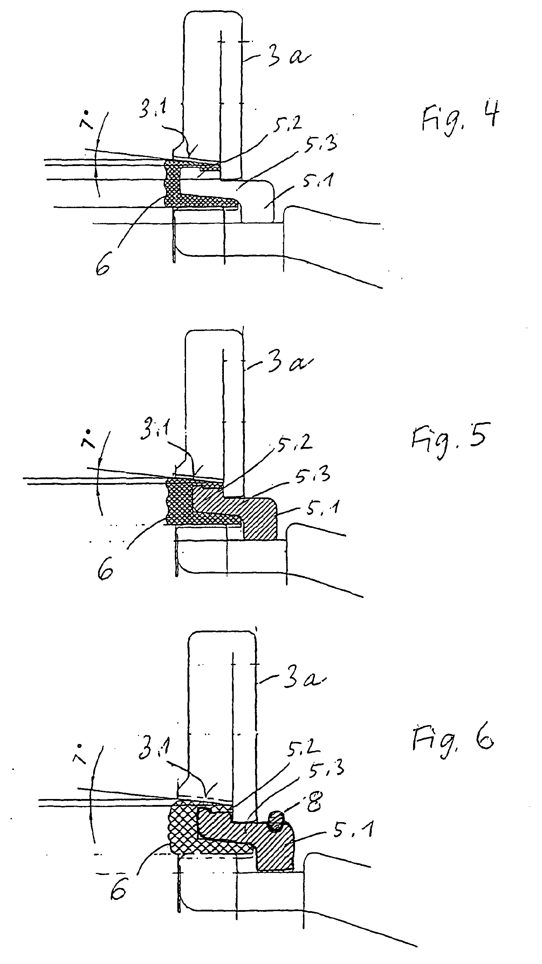

Die Ausführungsformen gemäß der Figuren 4, 5 und 6 sind ähnlich der Ausführungsform gemäß Figur 3. Dichtring 6 hat wiederum ein U-förmiges Querschnittsprofil. Dabei sind die beiden Schenkel ungleich lang. Der untere Schenkel ist etwas länger und reicht an den vertikalen Abschnitt des Halteringes 5 heran.

Absatz 3.1 des Losflansches 3a - und damit auch die obere Fläche des oberen Schenkels des Dichtringes 6 - sind gegen die Horizontale geneigt. Sie bilden mit der nicht dargestellten Längsachse des Rohrabschnittes 1 einen Winkel, im vorliegenden Falle 7 Grad. Andere Winkelgrößen wären denkbar, beispielsweise 3, 4, 5, 6, 8, 10, 12 und so weiter Grad.

Bei der Ausführungsform gemäß Figur 6 trägt der Haltering 5 einen Sprengring 8. Dieser dient zur Sicherung des Losflansches 3a gegen Herabrutschen vom Dichtring 6 und vom Haltering 5, beispielsweise beim Transport oder bei der Handhabung.

### Bezugszeichenliste

- 1: Rohrabschnitt
- 2: Festflansch
- 3/3a: Festflansch/Losflansch
- 3.1: Absatz des Losflansches 3a
- 4: Ringspalt
- 5: Haltering
- 5.1: radial inneres Ende des Halteringes
- 5.2: radial äußeres Ende des Halteringes
- 5.3: Steg des Halteringes
- 6: Dichtring
- 7: Nut/Ringnut
- 8: Sprengring
- 10: zweiter Rohrabschnitt
- 11: Festflansch
- 21: Schraube
- 22: Mutter

## Patentansprüche

1. Verfahren zum Herstellen einer Armatur, die die folgenden Bauteile umfasst:
einen Rohrabschnitt (1) sowie einen Losflansch (3a) zum Aufbringen auf einen Endbereich des Rohrabschnittes (1),
1.1 es wird eine Armatur mit wenigstens einem festen Flansch (2, 3) bereitgestellt;
1.2 von der Armatur wird in einem zur Längsachse des Rohrabschnittes (1) konzentrischen Zylinderschnitt ein als Losflansch dienender Ring (3a) abgetrennt; **gekennzeichnet durch** die folgenden Verfahrensechritte:
1.3 der Losflansch (3a) wird mittels einer Verbindungseinrichtung (5, 6) mit dem Endbereich des Rohrabschnittes (1) verbunden;
1.4 zum Herstellen der Verbindung zwischen Losflansch (3a) und Endbereich des Rohrabschnittes (1) wird der Rohrabschnitt (1) mit einer Nut/Ringnut (7) versehen;
1.5 als Verbindungseinrichtung wird ein Haltering (5) verwendet, der mit einem radial inneren Ende (5.1) In die Nut/Ringnut (7) eingreift, und mit einem radial äußeren Ende (5.2) am Losflansch (3a) angreift,
1.6 es wird ein abgekröpfter Dichtring (6) verwendet, umfassend einen radial inneren Abschnitt und einen radial äußeren Abschnitt, wobei der Dichtring (6) den radial äußeren Abschnitt (5.2) des Halteringes (5) umgreift

2. Verfahren nach Anspruch 1, **dadurch gekennzeichnet, dass** die Armatur durch Gießen hergestellt wird.

3. Verfahren nach Anspruch 1, **dadurch gekennzeichnet, dass** die Armatur durch spanabhebende Fertigung hergestellt wird,

4. Verfahren nach einem der Ansprüche 1 bis 3, **dadurch gekennzeichnet, dass** der Haltering (5) mit einem Sprengring (8) zum Sichern des Losflansches (3a) gegen Abrutschen vom Haltering (5) versehen wird.

5. Armatur, insbesondere hergestellt mit einem Verfahren gemäß Anspruch 1, umfassend die folgenden Bauteile:
5.1 einen Rohrabschnitt (1);
5.2 einen Losflansch (3a) zum Aufbringen auf einen Endbereich des Rohrabschnittes (1);
5.3 eine Verbindungseinrichtung zum Herstellen einer Verbindung zwischen dem Losflansch (3a) und dem Rohrabschnitt (1);
5.4 der Rohrabschnitt (1) ist im Bereich des Losflansches (3a) mit einer Nut/Ringnut (7) versehen; **gekennzeichnet durch** die folgenden weiteren Bauteile beziehungsweise Merkmale
5.6 es ist ein Haltering (5) vorgesehen, der mit einem radial inneren Ende (5.1) in die Nut/Ringnut (7) eingreift, und mit einem radial äußeren Ende (5.2) am Losflansch (3a) angreift;
5.6 es ist ein Dichtring (6) vorgesehen, der zwischen dem radial inneren Ende des Losflansches (3a) und dem Endbereich des Rohrabschnittes (1) angeordnet ist;
5.7 das radial innere und das radial äußere Ende (5.1, 5.2) des Halteringes (5) sind in axialer Richtung gegeneinander versetzt und **durch** einen Steg (5.3) miteinander verbunden;
5.8 der Dichtring (6) weist ein U-förmiges Profil auf und umgreift das radial äußere Ende (5.2) sowie den Steg (5.3) des Halteringes (5).

## Claims

1. A method for manufacturing of an armature, comprising the following components: a tubular section (1) as well as a loose flange (3a) for fastening to an end region of the tubular section (1),
1.1 an armature is fitted with at least one fixed flange (2, 3);
1.2 a ring (3a) serving as a loose flange is separated from the armature in a cylindrical section concentric to the longitudinal axis of the tubular section (1); **characterised by** the following method steps
1.3 the loose flange (3a) is connected to an end region of the tubular section (1) by means of a connecting device (5, 6);
1.4 the tubular section (1) is fitted with a groove / ring groove (7) to provide the connection between loose flange (3a) and end region of the tubular section (1);
1.5 a retainer ring (5) is used as a connecting device, which engages into the groove / ring groove (7) with a radially internal end (5.1), and catches on the loose flange (3a) with a radially external end (5.2),
1.6 a seal ring (6) bent at right angle is used, comprising a radially internal section and a radially external section, wherein the seal ring (6) encompasses the radially external section (5.2) of the retainer ring (5).

2. The method of claim 1, **characterised in that** the armature is manufactured by a casting process.

3. The method of claim 1, **characterised in that** the armature is manufactured by a chip removal process.

4. The method according to one of the claims 1 to 3, **characterised in that** the retainer ring (5) is fitted with a snap ring (8) for securing the loose flange (3a) the retainer ring (5) against slipping off.

5. An armature, in particular produced with a method according to claim 1, comprising the following components:
5.1 a tubular section (1);
5.2 a loose flange (3a) for fastening to an end region of the tubular section (1);
5.3 a connecting device for securing connection between the loose flange (3a) and the tubular section (1);
5.4 the tubular section (1) is fitted with a groove / ring groove (7) in the region of the loose flange (3a); **characterised by** the following additional components or features
5.5 a retainer ring (5) is provided, which engages into the groove / ring groove (7) with a radially internal end (5.1), and catches on the loose flange (3a) with a radially external end (5.2);
5.6 a seal ring (6) is provided, which is arranged between the radially internal end of the loose flange (3a) and the end region of the tubular section (1);
5.7 the radially internal and the radial external end (5.1, 5.2) of the retainer ring (5) are offset with respect to one another in the axial direction and connected to one another via a spacer (5.3);
5.8 the seal ring (6) has a U-shaped profile and encompasses the radial external end (5.2) as well as the spacer (5.3) of the retainer ring (5).

## Revendications

1. Procédé de fabrication d'une armature, comprenant les composants suivants: une section tubulaire (1) de même qu'une bride tournante (3a) pour montage sur une zone d'extrémité de la section tubulaire (1),
1.1 une armature est prévue avec au moins une bride fixe (2, 3);
1.2 une bague (3a) faisant office de bride tournante est séparée de l'armature dans un tronçon cylindrique concentrique de l'axe longitudinal de la section tubulaire (1); **caractérisé par** les phases de procédé suivantes
1.3 la bride tournante (3a) est connectée à la zone d'extrémité de la section tubulaire (1) à l'aide d'un dispositif de connexion (5, 6);
1.4 la section tubulaire (1) est pourvue d'une gorge / gorge annulaire (7) pour constituer la liaison entre la bride tournante (3a) et la zone d'extrémité de la section tubulaire (1);
1.5 on utilise une bague de retenue (5) comme dispositif de connexion, qui engrène dans la gorge / gorge annulaire (7) avec une extrémité interne radiale (5.1), et s'engage dans la bride tournante (3a) à l'aide d'une extrémité externe radiale (5.2),
1.6 on utilise une bague d'étanchéité (6) recourbée à angle droit, comprenant une section radialement interne et une section radialement externe, où la bague d'étanchéité (6) enserre la section radialement externe (5.2) de la bague de retenue (5).

2. Procédé selon la revendication 1, **caractérisé en ce que** l'armature est produite par coulage.

3. Procédé selon la revendication 1, **caractérisé en ce que** l'armature s'obtient par un procédé d'enlèvement de copeaux.

4. Procédé selon l'une quelconque des revendications 1 à 3, **caractérisé en ce que** la bague de retenue (5) est pourvue d'une bague de sécurité (8) pour éviter que la bride tournante (3a) ne se détache de la bague de retenue (5).

5. Armature, en particulier fabriquée selon un procédé conforme à la revendication 1, comprenant les composants suivants:
5.1 une section tubulaire (1);
5.2 une bride tournante (3a) pour montage sur une zone d'extrémité de la section tubulaire (1);
5.3 un dispositif de connexion pour assurer la liaison entre la bride tournante (3a) et la section tubulaire (1);
5.4 la section tubulaire (1) est pourvue d'une gorge / gorge annulaire (7) dans la zone de la bride tournante (3a); **caractérisée par** les composants ou éléments supplémentaires suivants
5.5 une bague de retenue (5) est prévue, qui engrène dans la gorge / gorge annulaire (7) avec une extrémité intérieure radiale (5.1), et s'engage dans la bride tournante (3a) à l'aide d'une extrémité externe radiale (5.2);
5.6 une bague d'étanchéité (6) est prévue, qui est disposée entre l'extrémité interne radiale de la bride tournante (3a) et la zone d'extrémité de la section tubulaire (1);
5.7 l'extrémité radialement interne et l'extrémité radialement externe (5.1, 5.2) de la bague de retenue (5) sont décalées l'une par rapport à l'autre axialement et reliée l'une à l'autre par une entretoise (5.3);
5.8 la bague d'étanchéité (6) présente un profil en forme de U et enserre l'extrémité radialement externe (5.2) de même que l'entretoise (5.3) de la bague de retenue (5).
